# FASCICULE DE BREVET EUROPEEN

(11) **EP 4 313 762 B1**
(45) Date de publication et mention de la délivrance du brevet: **05.11.2025**
(21) Numéro de dépôt: 22714486.2
(22) Date de dépôt: 17.03.2022
(51) Int. Cl.: B64C 30/00, B64G 1/00, B64D 27/02

(54) **SYSTÈME DE TRANSPORT HYPERSONIQUE**
HYPERSCHALLTRANSPORTSYSTEM
HYPERSONIC TRANSPORT SYSTEM

(30) Priorité: 23.03.2021 FR 2102867
(43) Date de publication de la demande: 07.02.2024
(73) Titulaire: ArianeGroup SAS, 78130 Les Mureaux (FR)
(72) Inventeur: PRAMPOLINI, Marco, 33185 LE HAILLAN (FR); DUTHEIL, Jean-Philippe, 33185 LE HAILLAN (FR); BOUE, Yoan, 33185 LE HAILLAN (FR)
(74) Mandataire: Cabinet Beau de Loménie
(86) Numéro de dépôt international: PCT/FR2022/050484
(87) Numéro de publication internationale: WO 2022/200713

(56) Documents cités:
- CN-B- 107 985 626
- US-B1- 6 745 979
- DICK G J: "WAVERIDER AERODYNAMIC STUDY PROGRAMME AMATEUR RESEARCH IN SCOTLAND", PROCEEDINGS OF INTERNATIONAL HYPERSONIC WAVERIDER SYMPOSIUM, XX, XX, 17 October 1990 (1990-10-17), pages 1 - 18, XP009072463
- DAI PEI ET AL: "Design and aerodynamic performance analysis of a variable-sweep-wing morphing waverider", AEROSPACE SCIENCE AND TECHNOLOGY, ELSEVIER MASSON, FR, vol. 98, 15 January 2020 (2020-01-15), XP086057310, ISSN: 1270-9638, [retrieved on 20200115], DOI: 10.1016/J.AST.2020.105703

## Description

### Domaine Technique

L'invention concerne un système de transport hypersonique, c'est-à-dire un système permettant d'atteindre une vitesse supérieure à 1700m/s. L'invention concerne notamment un système de transport avec un système de propulsion de type moteur-fusée.

### Technique antérieure

Actuellement, les longs trajets sont généralement effectués en avion. Les avions de ligne volant généralement à une vitesse comprise entre 800km/h et 900km/h, effectuer un trajet de 6000km peut ainsi prendre plus de 7h. En outre, certains vols commerciaux de très longue distance, comme par exemple entre Paris et Tokyo, peuvent durer plus de 12h.

De plus, certains vols très longue distance peuvent nécessiter une escale afin de ravitailler l'avion en carburant.

Ainsi, actuellement les longs trajets tendent à monopoliser au moins une journée complète pour les voyageurs.

Il est connu du document US6745979, de l'article « Waverider Aerodynamic Study Programme Amateur Research in Scotland », XP009082463, de l'article « Design and aerodynamic performance analysis of a variable-sweep-wing morphing waveride », XP086057310, et du document CN107985626, différents système de transport hypersonique illustrant l'état de la technique.

### Exposé de l'invention

La présente invention a donc pour but principal de proposer une solution de transport permettant de réaliser de longs trajets en un temps rapide.

Selon un premier aspect, l'invention concerne un système de transport hypersonique comprenant :
- un aéronef qui comprend une finesse hypersonique supérieure ou égale à 2,5, l'aéronef comprenant un dispositif de propulsion secondaire et des capteurs de position, l'aéronef comprenant également une surface aérodynamique à forme variable ;
- un dispositif de propulsion principal qui est fixé de manière amovible sur l'aéronef ;
- une unité de commande qui est configurée pour contrôler l'aéronef et le dispositif de propulsion principal de manière à réaliser les étapes suivantes en maintenant un facteur de charge inférieur à 1,5G :
   * une étape de décollage et de montée jusqu'à une altitude supérieure ou égale à 30km avec une vitesse supérieure ou égale à 3000 m/s, le dispositif de propulsion principal étant séparé de l'aéronef à la fin de l'étape de décollage et de montée ;
   * une étape de croisière par rebonds sur l'atmosphère terrestre durant laquelle l'unité de commande contrôle le dispositif de propulsion secondaire pour maintenir la vitesse de l'aéronef et maintenir une trajectoire prédéfinie de l'aéronef ;
   * une étape de descente et d'atterrissage durant laquelle l'unité de commande contrôle la modification de la forme de la surface aérodynamique de l'aéronef pour réaliser une descente dissipative, l'unité de commande contrôlant ensuite le dispositif de propulsion secondaire pour réaliser un ralentissement actif de l'aéronef après la descente dissipative.

Un tel système est notamment avantageux pour des effectuer des trajets de plus de 6000km.

Selon une caractéristique possible, l'unité de commande est configurée pour contrôler l'aéronef et le dispositif de propulsion principal pour assurer une montée verticale durant l'étape de décollage et de montée.

Selon une caractéristique possible, l'unité de commande est configurée pour contrôler l'aéronef et le dispositif de propulsion principal pour assurer une descente verticale durant l'étape de descente et d'atterrissage.

Selon une caractéristique possible, le dispositif de propulsion principal est un moteur-fusée à ergols liquides.

Selon une caractéristique possible, le dispositif de propulsion principal est un moteur-fusée à ergols liquides réutilisable.

Selon une caractéristique possible, le dispositif de propulsion secondaire comprend d'une part un ensemble propulsif avant situé à une extrémité avant de l'aéronef, et d'autre part un ensemble propulsif arrière situé à une extrémité arrière de l'aéronef opposée à l'extrémité avant, l'unité de commande étant configurée pour contrôler le dispositif de propulsion secondaire pour retourner l'aéronef lors de l'étape de descente et d'atterrissage.

Selon une caractéristique possible, le dispositif de propulsion secondaire est un dispositif de propulsion ré-allumable.

Selon une caractéristique possible, l'aéronef comprend des ailes, chacune des ailes comprenant une extrémité mobile qui formant une surface aérodynamique à forme variable.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement un système de transport hypersonique avec un aéronef fixé sur un booster d'un dispositif de propulsion principal.
[Fig. 2] La figure 2 représente schématiquement une vue de face de l'aéronef de la figure 1.
[Fig. 3] La figure 3 représente schématiquement le système de transport hypersonique de la figure 1 qui est positionné sur une station de décollage.
[Fig. 4] La figure 4 représente schématiquement le système de transport hypersonique de la figure 1 qui est positionné sur une station d'atterrissage.
[Fig. 5] La figure 5 représente schématiquement les différentes phases d'un vol du système de transport hypersonique.

### Description des modes de réalisation

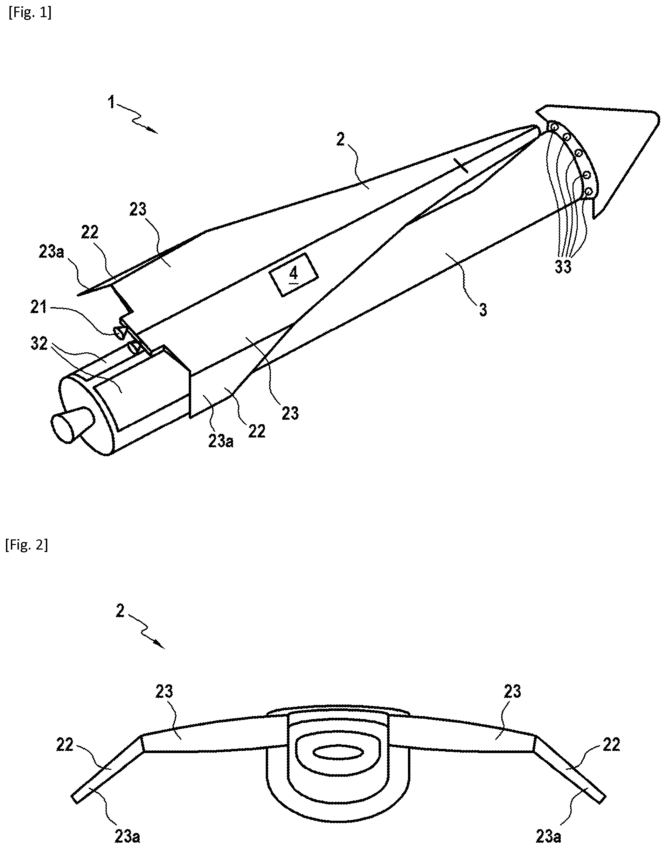

Comme cela est illustré sur la figure 1, un système de transport 1 hypersonique comprend un aéronef 2 ainsi qu'un dispositif de propulsion principal 3 sur lequel l'aéronef 2 est monté. L'aéronef 2 a pour fonction de recevoir les passagers et de les transporter depuis une station de départ vers une station d'arrivée. Le dispositif de propulsion principal 3 a pour fonction de fournir l'essentiel de la poussée nécessaire pour effectuer le trajet entre la station de départ et la station d'arrivée.

Le dispositif de propulsion principal 3 peut par exemple être un dispositif à propulsion solide, ou bien un dispositif à propulsion liquide. Le dispositif de propulsion principal 3 peut ainsi être un moteur-fusée à propergol solide, ou bien un moteur-fusée à ergols liquides. De manière préférentielle, le dispositif de propulsion principal 3 est réutilisable, c'est-à-dire que le dispositif de propulsion principal 3 peut être récupéré et remis en état afin d'être utilisé pour plusieurs missions. Afin d'assurer la récupération du dispositif de propulsion principal 3, ledit dispositif de propulsion principal 3 peut comprendre des volets 31 déployables et des propulseurs de retournement 32 situés à une extrémité avant du dispositif de propulsion principal 3. Les volets 31 et les propulseurs de retournement 32 permettent d'assurer le contrôle de la descente et de l'atterrissage du dispositif de propulsion principal 3.

Le dispositif de propulsion principal 3 est fixé de manière amovible à l'aéronef 2, permettant ainsi de détacher le dispositif de propulsion principal 3 de l'aéronef 2 lorsque la mission de dispositif de propulsion principal 3 est terminée. La fixation entre le dispositif de propulsion principal 3 et l'aéronef 2 peut par exemple être réalisée par des boulonnages explosifs.

L'aéronef 2 comprend un dispositif de propulsion secondaire 21 qui est configuré pour propulser et participer au contrôle de la trajectoire de l'aéronef 2. La poussée fournie par le dispositif de propulsion secondaire 21 est inférieure à la poussée fournie par le dispositif de propulsion principal 3. De manière préférentielle, le dispositif de propulsion secondaire 21 est un système de propulsion ré-allumable, permettant ainsi d'allumer de manière ponctuelle le dispositif de propulsion secondaire 21 afin de fournir ponctuellement de la poussée à l'aéronef 2. Le dispositif de propulsion 21 peut par exemple être un moteur-fusée à ergols liquides.

L'aéronef 2 comprend également des capteurs de position qui permettent de déterminer la position de l'aéronef 2 durant les différentes étapes du vol du système de transport 1.

L'aéronef 2 comprend également une surface aérodynamique à forme variable 22 qui permet de contrôler la forme de l'aéronef 2 pendant les différentes étapes du vol du système de transport 1, permettant ainsi de contrôler la vitesse et la trajectoire de l'aéronef 2. Comme visible sur les figures 1 et 2, la surface aérodynamique à forme variable 22 peut être formée par une extrémité mobile 23a des ailes 23 de l'aéronef 2 qui peut être baissée ou levée afin de faire varier la forme des ailes 23..

Afin de contrôler les différents éléments du système de transport 1, une unité de commande 4 est reliée à l'aéronef 2 et au dispositif de propulsion principal 3. L'unité de commande 4 comprend d'une part une mémoire sur laquelle est enregistrée un procédé de contrôle du système de transport 1, et d'autre part un processeur configuré pour mettre en œuvre le procédé.

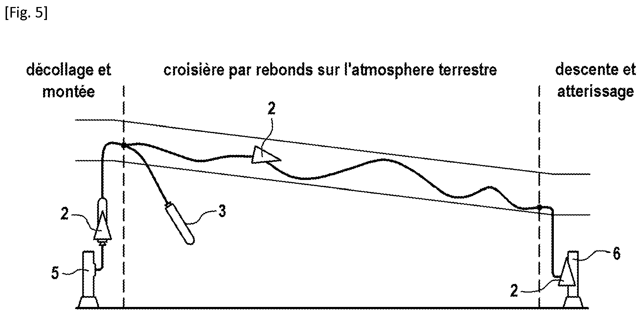

Comme cela est illustré sur la figure 5, l'unité de commande 4 est configurée pour contrôler le système de transport 1 afin de mettre en œuvre les étapes suivantes :
- Une étape de décollage et de montée jusqu'à une altitude supérieure ou égale à 30km avec une vitesse supérieure ou égale à 3000 m/s. La poussée fournie durant cette étape de décollage et de montée est fournie par le dispositif de propulsion principal 3. A la fin de l'étape de décollage et de montée, le dispositif de propulsion principal 3 est détaché de l'aéronef 2, et peut ensuite être récupéré si le dispositif de propulsion 3 est réutilisable. Cette étape permet de monter à une altitude suffisante et de donner à l'aéronef 2 une vitesse suffisante pour mettre en œuvre l'étape suivante de croisière par rebonds sur l'atmosphère terrestre.
- Une étape de croisière par rebonds sur l'atmosphère terrestre durant laquelle l'unité de commande 4 commande le dispositif de propulsion secondaire 21 pour maintenir la vitesse de l'aéronef 2 et la trajectoire de l'aéronef 2 prédéfinie en fonction de la destination de l'aéronef 2. Le dispositif de propulsion secondaire 21 est activé afin d'assurer que l'aéronef 2 possède une vitesse suffisante pour rebondir sur l'atmosphère terrestre. Le dispositif de propulsion secondaire 21 est également activé afin de contrôler la taille de rebonds, ce qui influe ainsi sur la trajectoire de l'aéronef 2. L'activation du dispositif de propulsion secondaire 21 peut être ponctuelle, par exemple une activation avant un rebond. Durant cette étape de croisière l'aéronef 2 perd de l'altitude par rapport au point d'injection. La vitesse de l'aéronef 2 à la fin de cette étape de croisière peut être inférieure à la vitesse d'injection de l'aéronef 2 à la fin de l'étape de décollage et de montée
- Une étape de descente et d'atterrissage au point de destination durant laquelle l'unité de commande 4 contrôle la modification de la forme de la surface aérodynamique à forme variable 22 de l'aéronef 2 afin de réaliser une descente dissipative, l'unité de commande 4 contrôlant ensuite le dispositif de propulsion secondaire 21 pour réaliser un ralentissement actif de l'aéronef après la phase de descente dissipative. Une descente dissipative est une chute libre dans laquelle l'aéronef 2 ralenti par dissipation avec les frottements de l'atmosphère terrestre, la forme de l'aéronef 2 étant modifiée durant cette étape de descente dissipative afin de donner une forme qui augmente la dissipation d'énergie cinétique, cette forme n'étant pas adaptée pour les autres étapes et notamment l'étape de croisière par rebonds sur l'atmosphère.

Comme cela est illustré sur la figure 5, une manœuvre de retournement de l'aéronef 2 peut être réalisée pour réaliser le ralentissement actif de l'aéronef 2 par le dispositif de propulsion secondaire 21 afin de diriger ledit dispositif de propulsion secondaire 21 en direction du sol et ainsi générer une poussée opposée au déplacement de l'aéronef pour le ralentir. Afin d'assurer un retournement de l'aéronef 2 lors de l'étape de descente et d'atterrissage, le dispositif de propulsion secondaire 21 peut comprendre d'une part un ensemble propulsif avant situé à une extrémité avant de l'aéronef 2, et d'autre part un ensemble propulsif arrière situé à une extrémité arrière de l'aéronef 2 opposée à l'extrémité avant, l'unité de commande 4 contrôlant l'ensemble propulsif avant et l'ensemble propulsif arrière afin d'assurer le retournement de l'aéronef.

Le fait de réaliser une descente dissipative avant de réaliser un ralentissement actif de l'aéronef permet de lisser ralentissement de l'aéronef 2, et permet également de réaliser les manœuvres pour le ralentissement actif via le dispositif de propulsion secondaire 21 à une vitesse plus faible, et donc avec un facteur de charge plus faible pour les passagers. En outre, une telle phase de descente dissipative permet de réduire la quantité de carburant nécessaire au dispositif de propulsion secondaire 2 pour ralentir activement l'aéronef.

Afin de permettre à l'aéronef 2 de réaliser des rebonds sur l'atmosphère terrestre après son injection à au moins 30 km d'altitude et au moins 3000 m/s, l'aéronef 2 présente une finesse hypersonique supérieure ou égale à 2,5. Une finesse hypersonique de 2,5 correspond à une forme permettant d'assurer une avancée de 2,5 mètres pour chaque 1 mètre d'altitude descendu, à une vitesse à partir de 1700 m/s (Mach 5).

Le fait que l'aéronef 2 soit injecté à une altitude supérieure ou égale à 30 km avec une vitesse supérieure ou égale à 3000 m/s, en combinaison avec la finesse de l'aéronef 2, permet à l'aéronef 2 de rebondir sur l'atmosphère terrestre. En outre, à au moins 30 km d'altitude, la consommation de carburant est réduite car la densité de l'air est plus faible. Selon une variante possible, l'altitude à laquelle l'aéronef 2 est injecté à la fin de l'étape de décollage et de montée est comprise entre 30 km et 80 km. Selon une variante possible, la vitesse à laquelle l'aéronef 2 est injecté à la fin de l'étape de décollage et de montée est comprise entre 3000 m/s et 6000 m/s.

En outre, afin de permettre d'accueillir des passagers des vols en avion commerciaux actuels, c'est-à-dire des passagers qui n'ont pas suivi un entrainement spécial, l'unité de commande 4 contrôle le système de transport 1 afin de maintenir facteur de charge positif et inférieur à 1,5G lors des différentes étapes du transport. Ainsi, l'unité de commande 4 contrôle l'accélération et la trajectoire du système de transport 1 afin de maintenir un facteur de charge positif et inférieur à 1,5G, et de préférence avec une oscillation la plus faible possible comprise entre 0,7G et 1,5G, voire si possible avec un facteur de charge égal à 1G ± 0,3G.

De manière avantageuse, comme cela est illustré sur la figure 5, la montée du système de transport 1 durant l'étape de décollage et de montée est verticale. Par montée verticale on comprend ici une montée avec un angle inférieure ou égale à 15° par rapport à l'axe vertical. Le fait que la montée du système de transport 1 soit verticale permet que l'onde de choc provoquée par le passage à Mach 1 soit dirigée horizontalement et non pas vers le sol, réduisant ainsi fortement la nuisance sonore au sol.

De manière similaire, comme cela est illustré sur la figure 5, la descente de l'aéronef 2 peut être verticale lors de l'étape de descente et d'atterrissage. Par descente verticale on comprend ici une descente avec un angle inférieure ou égale à 15° par rapport à l'axe vertical. Le fait que la descente du système de transport 1 soit verticale permet là encore que l'onde de choc provoquée soit dirigée horizontalement et non pas vers le sol, réduisant ainsi fortement la nuisance sonore au sol.

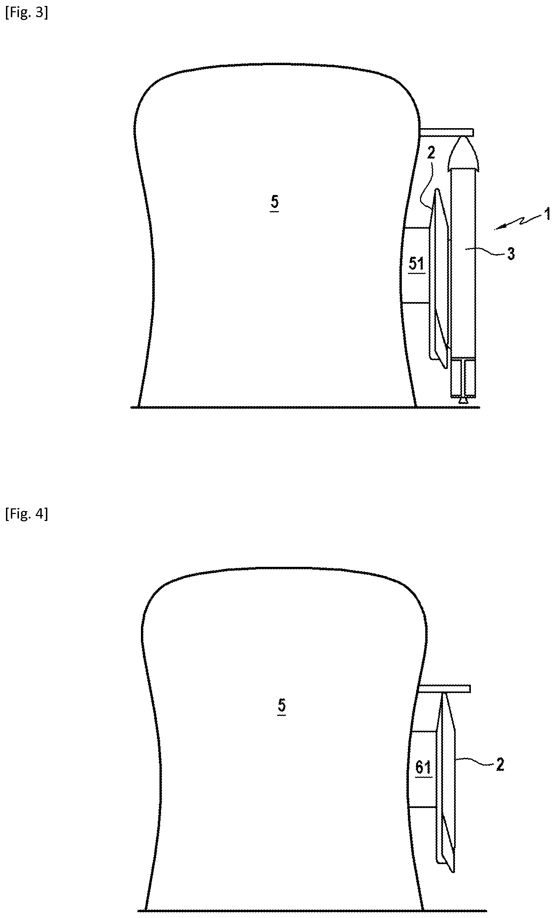

La figure 3 représente schématiquement le système de transport 1 qui est installé sur une base de décollage 5. La base de décollage 5 illustrée sur la figure 3 est une base adaptée pour un décollage et une montée verticale du système de transport 1. La base de décollage 5 comprend une rampe de connexion 51 qui connecte la base de décollage 5 à l'aéronef afin que les passagers puissent embarquer. Dans le cas où le dispositif de propulsion principal 3 est réutilisable et est récupéré, le dispositif de propulsion principal 3 peut retourner à la base de décollage 5 après s'être détaché de l'aéronef 2 à la fin de l'étape de décollage et de montée.

La figure 4 représente schématique l'aéronef 2 qui est installé sur une base d'atterrissage 6. La base d'atterrissage 6 illustrée sur la figure 4 est une base adaptée pour une descente et un atterrissage verticale de l'aéronef 2. La base d'atterrissage 6 comprend une rampe de connexion 61 qui connecte la base de d'atterrissage 6 à l'aéronef 2 afin que les passagers puissent débarquer.

## Revendications

1. Système de transport (1) hypersonique pour transport de passagers sur un vol commercial comprenant :
- un aéronef (2) qui comprend une finesse hypersonique supérieure ou égale à 2,5, l'aéronef (2) comprenant un dispositif de propulsion secondaire (21) et des capteurs de position, l'aéronef (2) comprenant également une surface aérodynamique à forme variable (22) ;
- un dispositif de propulsion principal (3) qui est fixé de manière amovible sur l'aéronef (2) ;
- une unité de commande (4) qui est configurée pour contrôler l'aéronef (2) et le dispositif de propulsion principal (3) de manière à réaliser les étapes suivantes en maintenant un facteur de charge positif inférieur à 1,5G et supérieur à 0,7G :
* une étape de décollage et de montée jusqu'à atteindre, à la fin de l'étape de décollage et de montée, une altitude supérieure ou égale à 30km et une vitesse supérieure ou égale à 3000 m/s, le dispositif de propulsion principal (3) étant séparé de l'aéronef (2) à la fin de l'étape de décollage et de montée ;
* une étape de croisière par rebonds sur l'atmosphère terrestre durant laquelle l'unité de commande (4) contrôle le dispositif de propulsion secondaire (21) pour maintenir la vitesse de l'aéronef (2) et maintenir une trajectoire prédéfinie de l'aéronef (2) ;
* une étape de descente et d'atterrissage durant laquelle l'unité de commande (4) contrôle la modification de la forme de la surface aérodynamique à forme variable (22) de l'aéronef (2) pour réaliser une descente dissipative, l'unité de commande (4) contrôlant ensuite le dispositif de propulsion secondaire (21) pour réaliser un retournement et un ralentissement actif de l'aéronef (2) après la descente dissipative.

2. Système de transport selon la revendication 1, dans lequel l'unité de commande (4) est configurée pour contrôler l'aéronef (2) et le dispositif de propulsion principal (3) pour assurer une montée verticale durant l'étape de décollage et de montée.

3. Système de transport selon l'une quelconque des revendications 1 à 2, dans lequel l'unité de commande (4) est configurée pour contrôler l'aéronef (2) et le dispositif de propulsion principal (3) pour assurer une descente verticale durant l'étape de descente et d'atterrissage.

4. Système de transport selon l'une quelconque des revendications 1 à 3, dans lequel le dispositif de propulsion principal (3) est un moteur-fusée à ergols liquides.

5. Système de transport selon la revendication 4, dans lequel le dispositif de propulsion principal (3) est un moteur-fusée à ergols liquides réutilisable.

6. Système de transport selon l'une quelconque des revendications 1 à 5, dans lequel le dispositif de propulsion secondaire (21) comprend d'une part un ensemble propulsif avant situé à une extrémité avant de l'aéronef (2), et d'autre part un ensemble propulsif arrière situé à une extrémité arrière de l'aéronef (2) opposée à l'extrémité avant, l'unité de commande (4) étant configurée pour contrôler le dispositif de propulsion secondaire (21) pour retourner l'aéronef (2) lors de l'étape de descente et d'atterrissage.

7. Système de transport selon l'une quelconque des revendications 1 à 6, dans lequel le dispositif de propulsion secondaire (21) est un dispositif de propulsion ré-allumable.

8. Système de transport selon l'une quelconque des revendications 1 à 7, dans lequel l'aéronef (2) comprend des ailes, chacune des ailes comprenant une extrémité mobile qui forme une surface aérodynamique à forme variable (22).

## Patentansprüche

1. **Hyperschalltransportsystem** (1) für den Transport von Passagieren auf einem kommerziellen Flug, umfassend:
- ein Luftfahrzeug (2) mit einer Hyperschall-Gleitzahl von über oder gleich 2,5, wobei das Luftfahrzeug (2) eine Sekundärantriebsvorrichtung (21) und Positionssensoren umfasst, wobei das Luftfahrzeug (2) ferner eine aerodynamische Fläche mit variabler Form (22) umfasst;
- eine Hauptantriebsvorrichtung (3), die lösbar an dem Luftfahrzeug (2) befestigt ist;
- eine Steuereinheit (4), die ausgelegt ist, um das Luftfahrzeug (2) und die Hauptantriebsvorrichtung (3) derart zu steuern, dass die folgenden Schritte unter Einhaltung eines positiven Lastfaktors von unter 1,5 G und von über 0,7 G ausgeführt werden:
* ein Start- und Steigflug, bis am Ende des Start- und Steigflugs eine Höhe von über oder gleich 30 km und eine Geschwindigkeit von über oder gleich 3.000 m/s erreicht sind, wobei die Hauptantriebsvorrichtung (3) am Ende des Start- und Steigflugs vom Luftfahrzeug (2) getrennt wird;
* eine Phase des Gleitflugs durch Abprallen von der Erdatmosphäre, in der die Steuereinheit (4) die Sekundärantriebsvorrichtung (21) steuert, um die Geschwindigkeit des Luftfahrzeugs (2) beizubehalten und eine vordefinierte Flugbahn des Luftfahrzeugs (2) beizubehalten;
* eine Sink- und Landephase, in der die Steuereinheit (4) die Veränderung der Form der aerodynamischen Fläche mit variabler Form (22) des Luftfahrzeugs (2) steuert, um einen dissipativen Sinkflug durchzuführen, wobei die Steuereinheit (4) anschließend die Sekundärantriebsvorrichtung (21) steuert, um nach dem dissipativen Sinkflug ein Umdrehen und eine aktive Verlangsamung des Flugzeugs (2) zu bewirken.

2. Transportsystem nach Anspruch 1, wobei die Steuereinheit (4) ausgelegt ist, um das Luftfahrzeug (2) und die Hauptantriebsvorrichtung (3) zu steuern, um während der Start- und Steigphase einen vertikalen Aufstieg sicherzustellen.

3. Transportsystem nach einem der Ansprüche 1 bis 2, wobei die Steuereinheit (4) ausgelegt ist, um das Luftfahrzeug (2) und die Hauptantriebsvorrichtung (3) zu steuern, um während der Sink- und Landephase einen vertikalen Abstieg sicherzustellen.

4. Transportsystem nach einem der Ansprüche 1 bis 3, wobei die Hauptantriebsvorrichtung (3) ein Flüssigtreibstoff-Raketenmotor ist.

5. Transportsystem nach Anspruch 4, wobei die Hauptantriebsvorrichtung (3) ein wiederverwendbarer Flüssigtreibstoff-Raketenmotor ist.

6. Transportsystem nach einem der Ansprüche 1 bis 5, wobei die Sekundärantriebsvorrichtung (21) einerseits eine vordere Antriebseinheit, die sich an einem vorderen Ende des Luftfahrzeugs (2) befindet, und andererseits eine hintere Antriebseinheit, die sich an einem hinteren Ende des Luftfahrzeugs (2) gegenüber dem vorderen Ende befindet, umfasst, wobei die Steuereinheit (4) ausgelegt ist, um die Sekundärantriebsvorrichtung (21) zu steuern, um das Luftfahrzeug (2) während der Sink- und Landephase umzudrehen.

7. Transportsystem nach einem der Ansprüche 1 bis 6, wobei die Sekundärantriebsvorrichtung (21) eine wiederzündbare Antriebsvorrichtung ist.

8. Transportsystem nach einem der Ansprüche 1 bis 7, wobei das Luftfahrzeug (2) Tragflächen umfasst, wobei jede der Tragflächen ein bewegliches Ende umfasst, das eine aerodynamische Fläche mit variabler Form (22) bildet.

## Claims

1. A hypersonic transport system (1) comprising:
- an aircraft (2) which comprises a hypersonic lift-to-drag ratio greater than or equal to 2.5, the aircraft (2) comprising a secondary propulsion device (21) and position sensors, the aircraft (2) also comprising a variably shaped aerodynamic surface (22);
- a main propulsion device (3) which is removably attached to the aircraft (2);
- a control unit (4) which is configured to control the aircraft (2) and the main propulsion device (3) so as to perform the following stages while keeping a positive load factor less than 1.5 G and more than 0.7 G:
* a take-off and climb stage until reaching, at the end of the latter, an altitude greater than or equal to 30 km and a speed greater than or equal to 3,000 m/s, the main propulsion device (3) being separated from the aircraft (2) at the end of the take-off and climb stage;
* a stage of cruising by bouncing off the earth's atmosphere during which the control unit (4) controls the secondary propulsion device (21) to maintain the speed of the aircraft (2) and maintain a predefined trajectory of the aircraft (2);
* a descent and landing stage during which the control unit (4) controls the modification of the shape of the variably shaped aerodynamic surface (22) of the aircraft (2) to perform a dissipative descent, the control unit (4) then controlling the secondary propulsion device (21) to perform an active slowing down of the aircraft (2) after the dissipative descent.

2. The transport system according to claim 1, wherein the control unit (4) is configured to control the aircraft (2) and the main propulsion device (3) to ensure a vertical climb during the take-off and climb stage.

3. The transport system according to any one of claims 1 to 2, wherein the control unit (4) is configured to control the aircraft (2) and the main propulsion device (3) to ensure a vertical descent during the descent and landing stage.

4. The transport system according to any one of claims 1 to 3, wherein the main propulsion device (3) is a liquid propellant rocket engine.

5. The transport system according to claim 4, wherein the main propulsion device (3) is a reusable liquid propellant rocket engine.

6. The transport system according to any one of claims 1 to 5, wherein the secondary propulsion device (21) comprises on the one hand a front propulsion assembly located at a front end of the aircraft (2), and on the other hand a rear propulsion unit located at a rear end of the aircraft (2) opposite to the front end, the control unit (4) being configured to control the secondary propulsion device (21) to roll over the aircraft (2) during the descent and landing stage.

7. The transport system according to any one of claims 1 to 6, wherein the secondary propulsion device (21) is a re-ignitable propulsion device.

8. The transport system according to any one of claims 1 to 7, wherein the aircraft (2) comprises wings, each of the wings comprising a movable end which forms a variably shaped aerodynamic surface (22).
